Europäisches Patentamt

European Patent Office

Office européen des brevets

(19)

(11) Veröffentlichungsnummer: **0 048 393**

**A1**

(12) **EUROPÄISCHE PATENTANMELDUNG**

(21) Anmeldenummer: **81107094.5**

(22) Anmeldetag: **09.09.81**

(51) Int. Cl.³: **C 08 L 71/04**
**C 08 L 25/00**

(30) Priorität: **20.09.80 DE 3035648**

(43) Veröffentlichungstag der Anmeldung:
**31.03.82 Patentblatt 82/13**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbuechel 45**
**D-6730 Neustadt(DE)**

(72) Erfinder: **Echte, Adolf, Dr.**
**Leuschnerstrasse 42**
**D-6700 Ludwigshafen(DE)**

(72) Erfinder: **Gausepohl, Hermann, Dr.**
**Neuweg 10**
**D-6704 Mutterstadt(DE)**

(72) Erfinder: **Naarmann, Herbert, Dr.**
**Haardtblick 15**
**D-6719 Wattenheim(DE)**

(54) **Thermoplastische Formmassen.**

(57) Thermoplastische Formmassen auf der Grundlage von schlagfest modifizierten Styrolpolymerisaten und Polyphenylenäthern, wobei die Teilchen der Weichkomponente des schlagfest modifizierten Styrolpolymerisates einen mittleren Teilchendurchmesser von 0,1 bis 10 Mikron und 50 Gew.% der Teilchen einen Teilchendurchmesser von gleich oder weniger als 0,5 Mikron haben, wobei mindestens 50 Gew.% der Weichkomponente aus eingeschlossenem Matrixmaterial bestehen.

EP 0 048 393 A1

Croydon Printing Company Ltd.

0048393

BASF Aktiengesellschaft

O.Z. 0050/034669

Thermoplastische Formmassen

Die Erfindung betrifft thermoplastische Formmassen auf der Grundlage von schlagfest modifizierten Styrolpolymerisaten und Polyphenylenäthern.

Thermoplastische Massen, die sich zur Herstellung von Formteilen eignen und die schlagzäh modifizierte Styrolpolymerisate und Polyphenylenäther enthalten sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenäthern abgemischt sind, durch eine bessere Wärmeformbeständigkeit auszeichnen. Die Materialeigenschaften derartiger Formmassen sind im allgemeinen zufriedenstellend, doch hat es sich gezeigt, daß bei hoher Zähigkeit die Massen eine nicht ausreichendes Fließverhalten und bei gutem Fließverhalten eine nicht befriedigende Zähigkeit haben.

Der vorliegenden Erfindung lag daher die Aufgabe zugrunde, thermoplastische Formmassen auf der Grundlage von schlagfest modifizierten Styrolpolymerisaten und Polyphenylenäthern zu schaffen, die bei hoher Zähigkeit ein gutes Fließverhalten haben.

Diese Aufgabe wird erfindungsgemäß gelöst durch Formmassen, bei denen die Teilchen der Weichkomponente des schlagfest modifizierten Styrolpolymerisates einen mittleren Teilchendurchmesser von 0,1 bis 10 um und 50 Gew.-% der Teilchen einen Teilchendurchmesser von gleich oder weniger als 0.5 um haben, wobei mindestens 50 Gew.% der Weichkomponente aus eingeschlossenem Matrixmaterial bestehen.

vG/BL

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, daß die obengenannten Teilchengrößenverteilungen eintreten. Man kann aber auch schlagfest modifizierte Styrolpolymerisate, deren Weichkomponenten unterschiedliche Teilchengrößen haben, miteinander mischen. Die in den erfindungsgemäßen Formmassen enthaltenen Styrolpolymerisaten können beispielsweise durch Mischen von 80 Gew.-Teilen eines Polymerisates mit einer mittleren Teilchengröße von 0,5 Mikron mit 10 Gew.-Teilen eines Polymerisates mit einer mittleren Teilchengröße von 6 Mikron erhalten werden.

Besonders geeignet sind solche thermoplastische Formmassen, in denen die Teilchen der Weichkomponente einen mittleren Teilchendurchmesser von 0,2 bis 4 um haben. Bevorzugt sind auch solche Formmassen, worin die Teilchen der Weichkomponente des Styrolpolymerisates eine Kapsel- und/oder Zellenmorphologie haben.

Die thermoplastischen Formmassen können schlagfest modifizierte Styrolpolymerisate und Polyphenylenäthern in beliebigen Mengen, beispielsweise in Mengen von 5 bis 90 Gew.-% Styrolpolymerisat und 95 bis 10 Gew.-% Polyphenylenäther enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenäther enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate, des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt der zwischen 25 und 98 liegt.

Die Herstellung der schlagfest modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Äthylbenzol, die Xylole oder Gemische dieser Verbindungen.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 45 % in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azo-diisobutyronitril u.ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z.B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d.h. bis zu Umsätzen der monovinylaromati-

schen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (siehe z.B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein Weichkomponenten-Gehalt von 25 bis 35 Gewichtsprozent, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 15 Gew.-%, vorzugsweise von 5 bis 12 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weniger starkem Maße während der Polymerisation durch die monovinylaromatischen Verbindungen gepfropft worden sind. Die Teilchen sollen bevorzugt eine Kapsel- oder Zellenmorphologie haben. Man versteht darunter im Falle von Kapselmorphologie Weichkomponententeilchen mit Polybutadienschale und Hartkomponentenkern, der keine inneren Polybutadienmembranen enthält, im Falle von Zellenmorphologie Weichkomponententeilchen mit kugelförmigen bzw. kugelähnlichen Hartkomponenteneinschlüssen.

Die Bestimmung der mittleren Teilchengröße der dispersen Weichkomponente kann z.B. durch Auszählung und Auswertung elektronenmikroskopischer Dünnschichtaufnahmen der schlagfest modifizierten Polymerisate erfolgen (verg. F.Lenz, Zeitschrift für Wiss. Mikroskopie, 63 (1956), S. 50/56).

Die Einstellung der Teilchengröße der dispersen Weichkomponenten-Phase erfolgt dabei in an sich bekannter Weise
bei der Polymerisation der monovinylaromatischen Verbindungen durch Anpassen der Rührgeschwindigkeit im ersten
Abschnitt der Polymerisation, d.h. bis zu einem Umsatz der
Monomeren von gleich oder kleiner als 45 %. Dabei ist die
Teilchengröße der dispersen Weichkomponenten-Phase um so
größer, je kleiner die Rührerdrehzahl und damit je kleiner
die Scherbeanspruchung ist. Der Zusammenhang zwischen der
Rührgeschwindigkeit und der Größe und Verteilung der
Kautschukteilchen im resultierenden schlagfesten Polymerisat ist z.B. in der zitierten Arbeit von Freeguard beschrieben, auf welche hinsichtlich weiterer Einzelheiten
verwiesen wird. Die betreffende notwendige Rührgeschwindigkeit zur Erzielung der gewünschten Teilchengröße der
dispersen Weichkomponenten-Phase hängt unter anderem von
den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen
und Mitteln der zur gleichen Größenklasse (konst. Interwallbreite) gehörigen Teilchen aus elektronenmikroskopischen Dünnschichtaufnahmen. Mit den Volumina der Teilchen
(3. Potenz des scheinbaren Durchmessers) innerhalb der
Intervalle wird die Verteilungssummenkurve bestimmt. Beim
50 %-Ordinatenwert kann auf der Abszisse der Äquivalentdurchmesser dann abgegriffen werden. Die angegebenen
mittleren Durchmesser stellen dabei einen Mittelwert von
mindestens 5000 Teilchen dar.

Bei den Polyäthern handelt es sich um Verbindungen auf der
Basis von in ortho-Position disubstituierten Polyphenylenoxiden, wobei der Äthersauerstoff der einen Einheit an den

Benzolkern der benachbarten Einheit gebunden ist. Dabei sollen mindestens 50 Einheiten miteinander verknüpft sein. Die Polyäther können in ortho-Stellung zum Sauerstoff Wasserstoff, Halogen, Kohlenwasserstoffe, die kein $\alpha$-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-äther, Poly(2,6-diphenyl-1,4-phenylen)äther, Poly(2,6-dimethoxy-1,4-phenylen)äther, Poly(2,6-dimethyl-1,4-phenylen)äther, Poly(2,6-dibrom-1,4-phenylen)äther. Bevorzugterweise wird der Poly(2,6-dimethyl-1,4-phenylen)äther eingesetzt.

Die Polyphenylenäther können z.B. in Gegenwart von komplexbildenden Mitteln wie Kupferbromid und sek. Dibutylamin aus den Phenolen hergestellt werden. Bevorzugt werden solche Polyphenylenäther, die eine Grenzviskosität zwischen 0,45 und 0,65 dl/g (gemessen in Chloroform bei 30°C) besitzen.

Die Mischungen aus den schlagzäh modifizierten Styrolpolymerisaten und Polyphenylenäthern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Neben der hohen Zähigkeit und dem guten Fließverhalten haben die Formmassen weitere gute Eigenschaften, wie hohe Wärmeformbeständigkeit und hohe Schlagzähigkeit.

*Beispiele und Vergleichsversuche

Beispiele 1 bis 7

Ein schlagfestes Polystyrol mit einer mittleren Teilchen-größe $\leq$ 0,5 /um wird mit folgender Rezeptur erhalten:

In einem 5 1-Rührkessel mit Blattrührer wurde eine Lösung bestehend aus

1.560 g Styrol
  240 g Bu/S-Blockcopolymerisat mit verschmiertem
       Übergang zwischen den Blöcken: [$\eta$] = 1,74 [dl/g]
       (Toluol 25°); Blockpolystyrol = 31,0 %;
       [$\eta$] = 0,364 [dl/g] (Toluol 25°);
       Gesamtstyrolgehalt = 41,6 %
  1,6 g t-Dodecylmercaptan
  2,2 g Octadecyl-3(3',5'-ditert.-butyl-4-hydroxiphenyl)-
       -propionat
  1,7 g Dicumylperoxid

bei 110°C Innentemperatur und einer Rührerdrehzahl von 150 Upm bis zu einem Feststoffgehalt von 43,8 Gew.% vorpolymerisiert.

Anschließend wurden 1.800 ml Wasser, die 9,0 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 5 Stunden bei 120°C und 5 Stunden bei 140°C wurde bis zu einem Styrolumsatz > 99 % auspolymerisiert.

Ein schlagfestes Polystyrol mit einer mittleren Teilchengröße von ca. 1 /um wird nach folgender Rezeptur hergestellt:

In einer 2-Kessel-2-Turmkaskade wurde eine Mischung von 7,2 Gew.Teilen eines Polybutadiens mit einem cis-Anteil von 98 %, zusammen mit 85,7 Gew.Teilen Styrol, 6 Gew.Teilen Äthylbenzol und 0,1 Teilen Octadecyl-3-(3',5'-di--tert.-butyl-4'-hydroxiphenyl)-propionat thermisch polymerisiert. Der Durchsatz betrug 4 1/Stunde. Die in den einzelnen Reaktoren angewendeten Rührgeschwindigkeiten, Temperaturen sowie die eingestellten integralen Umsätze sind unten aufgeführt. In den dritten Reaktor wurden dem Polymerstrom 0,02 Gew.% tert.-Dodecylmercatan, bezogen auf Styrol, kontinuierlich zudosiert. Die Polymerisatmischung wurde nach der Polymerisation in einer Entgasungszone bei 220 bis 240°C vom Lösungsmittel und Restmonomeren befreit.

| Ort | Rührgeschwindigkeit [Upm] | Temp. [°C] | Umsatz (Integral) |
|---|---|---|---|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | - | 250 | - |

Nach folgender Vorschrift wird ein schlagfestes Polystyrol mit einer mittleren Teilchengröße von 2 bis 3 um hergestellt.

In einem 4 1-Rührkessel mit Blattrührer wurde eine Lösung bestehend aus

1283  g Styrol

112  g Polybutadien (1,2-Vinylgehalt ca. 9 Gew.%)

1,5 g t-Dodecylmercaptan

1,5 g Octadecyl-3(3',5'-di-tert.-butyl-4'-hydroxi-phenyl)-propionat

1,5 g Dicumylperoxid

bei 110°C Innentemperatur und einer Rührerdrehzahl von 300 Ump bis zu einem Feststoffgehalt von 25,4 Gew.% vorpolymerisiert. Anschließend wurden 1800 ml Wasser, die 9 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 3 Stunden bei 110°C, 3 Stunden bei 120°C und 4 Stunden bei 140°C wurde bis zu einem Styrolumsatz $> 99$ % auspolymerisiert.

Ein schlagfestes Polystyrol mit einer mittleren Teilchengröße um die 6/um wird nach der obigen Vorschrift erhalten, insofern die Vorpolymerisation bei einer Rührerdrehzahl von 150 Upm durchgeführt wird.

Durch Mischen der beschriebenen schlagfesten Polystyrole erhält man die erfindungsgemäßen Zusammensetzungen.

Die in der Tabelle angegebenen Gewichtsteile an schlagfest modifiziertem Polystyrol und Poly(2,6-dimethyl-1,4-phenylen)äther wurden mit jeweils 0,8 Gewichtsteilen Tris(nonylphenyl)phosphit und 1,5 Gewichtsteilen Polyäthylen auf einem Zweiwellenextruder bei 280°C aufgeschmolzen, homogenisiert, gemischt und granuliert. Der Poly(2,6-dimethyl-1,4-phenylen)-äther hatte eine Grenzviskosität von 0,48 dl/g (gemessen in Chloroform bei 30°C).

Vergleichsversuche

Vergleichsversuch A und B

Nach folgender Rezeptur wird ein Polybutadienlatex hergestellt:

48      kg destilliertes Wasser
32      kg Butadien
 0,236 kg Natriumstearat
 0,096 kg Kaliumperoxodisulfat
 0,32  kg tert.-Dodecylmercaptan
Polymerisationstemperatur 65°C
Reaktionszeit 21 Stunden
Umsatz 98 Gew.%.

25,0 kg des vorstehend beschriebenen Polybutadienlatex werden bei 65°C mit 2,0 kg destilliertem Wasser und 3,4 kg einer Emulsion eines Copolymeren aus 96 Gew.-Teilen Äthylacrylat und 4 Gew.-Teilen Methacrylsäureamid mit einem Feststoffgehalt von 10 Gew.-% 1 Stunde gerührt, wobei ein Polybutadienlatex mit einem mittleren Teilchendurchmesser von 0,35 um entsteht. Nach Zusatz von 0,065 kg Natriumstearat, 0,017 kg Kaliumperoxodisulfat und 2 kg destilliertem Wasser werden 6,6 kg Styrol innerhalb von 4 Stunden kontinuierlich zugeführt. Die erhaltene Pfropfkautschukdispersion wird mit Magnesiumsulfatlösung gefällt. Das abgetrennte Pfropfmischpolymerisat wird mit destilliertem Wasser gewaschen.

Auf einem Mischextruder wird bei 220°C eine Granulatmischung hergestellt, die im Falle von Vergleichsversuch A 35,9 Gew.-Teile des oben beschriebenen Pfropfmischpolymerisates und 64,2 Gew.-Teile eines Homopolystyrols mit der Viskositätszahl 74 [ml/g], im Falle von Vergleichsversuch B 15,0 Gew.-Teile des oben beschriebenen Pfropfmischpolymerisates und 85 Gew.-Teile eines Homopolymstyrols mit der Viskositätszahl 74 [ml/g] enthält. Anschließend werden jeweils die in der Tabelle angegebenen Gew.-Teile beider schlagfest modifizierten Typen, Poly(2,6-dimethyl-1,4-phenylen)äther und jeweils 0,8 Gew.-Teile Tris(nonylphenyl)phosphit und 1,5 Gew.-Teile Polyäthylen auf einem Zweiwellenextruder bei 280°C aufgeschmolzen, homogenisiert und anschließend granuliert.

Vergleichsversuch C

58,5 Gew.-Teile des im Vergleichsversuch B verwendeten schlagfesten Polystyrols, 6,5 Gew.-Teile eines schlagfesten Polystyrols mit einer mittleren Teilchengröße 6 um, 35 Gew.-Teile Poly(2,6-dimethyl-1,4-phenylen)äther, 0,8 Gew.-Teile Tris(nonylphenyl)phosphit und 1,5 Gew.-Teile Polyäthylen wurden auf einem Zweiwellenextruder bei 280°C aufgeschmolzen, homogenisiert und anschließend granuliert.

Vergleichsversuche D und E

Die in der Tabelle angegebenen Gewichtsteile an schlagfest modifiziertem Polystyrol und an Poly(2,6-dimethyl-1,4-phenylen)- äther werden mit jeweils 0,8 Gew.-Teilen Tris(nonylphenyl)phosphit und 1,5 Gew.-Teilen Polyäthylen auf einem 2-Wellen-Extruder bei 280°C geschmolzen, homogenisiert, gemischt und granuliert. Der Poly(2,6-dimethyl-1,4-phenylen)äther hatte eine Grenzviskosität von 0,48 dl/g.

Aus den Mischungen wurden mittels einer Spritzgußmaschine bei 280°C Prüfkörper hergestellt.

Die Bruchenergie der Prüfkörper wurde nach DIN 53 443, Blatt 1 ermittelt. Die Fließfähigkeit wurde anhand des Schmelzindex nach DIN 53 735 beurteilt. Die Messung der Viskositätszahlen erfolgte in 0,5 %iger Toluollösung nach DIN 51 562.

Die Ergebnisse sind in der Tabelle zusammengefaßt:

0048393

**Tabelle**

| Beispiel | Schlagfestes Polystyrol Gewichts-teile | Mittlere Teilchen-größe [_/um] | Gew.-Anteil an Teilchen ≤ 0,5 /um | Butadien-gehalt in der Mischung [Gew.-Tle.] | Schmelz-index 21,6 kg bei 250°C [g/10min] | Poly(2,6-di-methyl-1,4-phenylen) äther[1] [Gew.-Tle.] | Bruch-energie [_/um] |
|---|---|---|---|---|---|---|---|
| (erfindungsgemäß) | | | | | | | |
| 1 | 65 | 0,35 | 100 | 5,8 | 75 | 35 | 21,2 |
| 2 | 65 | 0,52 | 90 | 5,8 | 74 | 35 | 22,0 |
| 3 | 65 | 0,6 | 90 | 5,8 | 86 | 35 | 24,3 |
| 4 | 65 | 2,8 | 66 | 5,8 | 68 | 35 | 18 |
| 5 | 75 | 0,6 | 90 | 6,7 | 128 | 25 | 16,1 |
| 6 | 75 | 1,1 | 84 | 6,7 | 134 | 25 | 17,6 |
| 7 | 75 | 1,1 | 74 | 6,7 | 138 | 25 | 13,4 |
| Vergleichsversuch (nicht erfindungsgemäß) | | | | | | | |
| A | 65 | 0,35 | 100 | 14 | 23 | 35 | 20,2 |
| B | 65 | 0,35 | 100 | 5,8 | 70 | 35 | 2,4 |
| C | 65 | 0,52 | 90 | 5,8 | 76 | 35 | 8 |
| D | 65 | 4,1 | 33 | 5,8 | 69 | 35 | 2,7 |
| E | 75 | 1,1 | 44 | 6,7 | 136 | 25 | 6,0 |

1) Poly(2,6-dimethyl-1,4-phenylen)äther mit einer Grenzviskosität von 0,48 dl/g.

Patentansprüche

1. Thermoplastische Formmassen auf der Grundlage von schlagfest modifizierten Styrolpolymerisaten und Polyphenylenäthern, dadurch gekennzeichnet, daß die Teilchen der Weichkomponente des schlagfest modifizierten Styrolpolymerisates einen mittleren Teilchendurchmesser von 0,1 bis 10 Mikron und 50 Gew.-% der Teilchen einen Teilchendurchmesser von gleich oder weniger als 0,5 Mikron haben, wobei mindestens 50 Gew.% der Weichkomponente aus eingeschlossenem Matrixmaterial bestehen.

2. Thermoplastische Formmassen nach Anspruch 1, dadurch gekennzeichnet, daß die Weichkomponente 25 bis 35 Gewichtsprozent des schlagfest modifizierten Styrolpolymerisates beträgt.

| | Europäisches Patentamt | **EUROPÄISCHER RECHERCHENBERICHT** | **0048393**<br>Nummer der Anmeldung |
| | | | EP 81 10 7094 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl.³) |
|---|---|---|---|
| | FR - A - 2 134 399 (GENERAL ELEC-TRIC)<br><br>  * Ansprüche *<br><br>-- | 1,2 | C 08 L 71/04<br>25/00 |
| | FR - A - 2 197 042 (GENERAL ELEC-TRIC)<br><br>  * Ansprüche *<br><br>-- | 1,2 | |
| | FR - A - 2 337 173 (MONSANTO)<br>  * Ansprüche *<br><br>-- | 1,2 | **RECHERCHIERTE SACHGEBIETE (Int. Cl.³)** |
| | FR - A - 2 162 154 (GENERAL ELEC-TRIC)<br><br>  * Ansprüche *<br><br>-- | 1,2 | C 08 L  71/04<br>51/04<br>C 08 F 279/02<br>287/00<br>291/02 |
| | FR - A - 2 212 378 (GENERAL ELEC-TRIC)<br><br>  * Ansprüche *<br><br>-- | 1,2 | |
| | FR. - A. - 2 090 643 (GENERAL. ELEC-TRIC)<br><br>  * Ansprüche. *<br><br>---- | 1,2 | **KATEGORIE DER GENANNTEN DOKUMENTE**<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | Der vorliegende Recherchenbericht wurde für alle Patentansprüche erstellt. | | &: Mitglied der gleichen Patent-familie, übereinstimmendes Dokument |

| Recherchenort | Abschlußdatum der Recherche | Prüfer |
|---|---|---|
| Den Haag | 05-01-1982 | FOUQUIER |

EPA form 1503.1  06.78